# EUROPÄISCHE PATENTSCHRIFT

(11) **EP 0 810 017 B1**
(45) Veröffentlichungstag und Bekanntmachung des Hinweises auf die Patenterteilung: **23.07.2003**
(21) Anmeldenummer: 97108265.6
(22) Anmeldetag: 22.05.1997
(51) Int. Cl.: B01D 17/032, E03F 5/16, B01D 21/02

(54) **Flüssigkeitsabscheider**
Liquids separator
Séparateur de liquides

(30) Priorität: 29.05.1996 DE 29609522 U
(43) Veröffentlichungstag der Anmeldung: 03.12.1997
(73) Patentinhaber: Benkeser, Michael, Dipl.-Ing. (FH), D-77886 Lauf (DE)
(72) Erfinder: Benkeser, Michael, Dipl.-Ing. (FH), D-77886 Lauf (DE)
(74) Vertreter: Lasch, Hartmut Dipl.-Ing.

(56) Entgegenhaltungen:
- EP-A- 0 046 277
- EP-A- 0 387 780
- EP-A- 0 532 951
- EP-A- 0 720 861
- DE-A- 2 639 202
- DE-U- 8 625 464
- DE-U- 9 005 311
- DE-U- 9 401 148
- DE-U- 29 614 408
- GB-A- 2 228 751
- US-A- 3 662 918

## Beschreibung

Die Erfindung betrifft einen Flüssigkeitsabscheider, insbesondere zum Trennen von Gemischen aus Wasser und spezifisch leichteren Flüssigkeiten wie Öl, Benzin, Fett oder dergleichen, gemäß dem Oberbegriff des Anspruchs 1.

Zur Reinigung von gewerblichem Abwasser, insbesondere zum Trennen von Öl- bzw. Benzin-Wasser-Gemischen werden üblicherweise Leichtflüssigkeitsabscheider verwendet, um auf diese Weise den heutigen Abwasservorschriften genügen zu können. Bei Leichtflüssigkeitsabscheidern handelt es sich häufig um reine Schwerkraftabscheider, bei denen die spezifisch leichteren Anteile an die Oberfläche der im Flüssigkeitsabscheider befindlichen Flüssigkeit aufsteigen und sich dort ansammeln, während die spezifisch schwereren Teilchen auf den Boden des Abscheiderbehälters sinken.

Während früher der Schwerkraftabscheider aus einem Leichtflüssigkeitsabscheider und einer Schlammfangvorrichtung bestand, denen eine Probenentnahmevorrichtung nachgeschaltet war, findet heutzutage häufig eine sogenannte integrierte Anlage Verwendung, bei der die einzelnen Reinigungsbehälter bzw. Aggregate nicht als jeweils separates Bauteil ausgebildet und hintereinander angeordnet, sondern innerhalb eines Abscheiderbehälters vorgesehen sind. Die Schlammfangvorrichtung und der Leichtflüssigkeitsabscheider sind dabei durch Trennwände voneinander getrennt.

Bei integrierten Flüssigkeitsabscheidern tritt jedoch das Problem auf, daß die in dem Abscheiderbehälter angeordneten Aggregate, d.h. insbesondere die Schlammfangvorrichtung und der Leichtflüssigkeitsabscheider, einer wesentlichen Baugrößenbeschränkung durch den Abscheiderbehälter unterworfen sind. Sowohl für die Funktion der Schlammfangvorrichtung als auch für den Leichtflüssigkeitsabscheider ist es zur Erzielung eines hohen Abscheidegrades notwendig, daß die Schlammanteile bzw. die leichten Flüssigkeitströpfchen ausreichend Zeit haben, um sich am Boden abzusetzen bzw. in beruhigter Strömung aufzusteigen. Jedoch sind im Bodenbereich des Abscheiderbehälters die beruhigten Flüssigkeitsströmungen durch Einbauten häufig gestört, wodurch die Abscheiderergebnisse nachteilig beeinflußt sind. Des weiteren sind die bekannten integrierten Flüssigkeitsabscheider relativ teuer, da insbesondere die Trennwände und die damit verbundenen Einbauten relativ kostspielig sind.

Im Oberbegriff des Anspruchs 1 wird von einem Flüssigkeitsabscheider ausgegangen, wie er in der DE 26 39 202 A beschrieben ist. Ein derartiger Abscheider besitzt ein im wesentlichen S-förmig verlaufendes Steigrohr mit einer nach oben zum Flüssigkeitsspiegel weisenden Einlauföffnung, das dem Auslauf des Abscheiderbehälters vorgeschaltet ist. Nahe der Einlauföffnung ist auf der dem Einlauf des Abscheiderbehälters zugewandten Seite eine sogenannte Strömungsplatte angeordnet, die als eine zum Einlauf konkav gekrümmte Leitplatte ausgebildet ist, die vollständig innerhalb der im Abscheiderbehälter befindlichen Flüssigkeit liegt. Die durch den Einlauf in den Abscheiderbehälter eingeleitete Flüssigkeit kann die Strömungsplatte auf allen Seiten umströmen, wobei insbesondere zwischen den Seitenkanten der Strömungsplatte und der Innenwandung des Abscheiderbehälters sowie zwischen der Oberseite der Strömungsplatte und dem Flüssigkeitsspiegel der im Abscheiderbehälter befindlichen Flüssigkeit relativ kleine Strömungsdurchlässe gebildet sind, womit der Nachteil verbunden ist, daß die Strömungsgeschwindigkeit aufgrund einer Düsenwirkung wesentlich erhöht ist und es zu turbulenten Strömungen kommen kann, die die abzuscheidende Leichtflüssigkeit in unerwünschter Weise verwirbeln und mit in die Einlauföffnung des Steigrohres hineinreißen, wodurch die Abscheider- bzw. Reinigungsleistung des Flüssigkeitsabscheiders nachteilig beeinflußt ist.

Der Erfindung liegt die Aufgabe zugrunde, einen gattungsgemäßen Flüssigkeitsabscheider derart weiterzubilden, daß ein hoher Abscheidegrad bei einfachem und kostengünstigem konstruktiven Aufbau erreicht werden kann.

Diese Aufgabe wird erfindungsgemäß durch einen Flüssigkeitsabscheider der genannten Art gelöst, der zusätzlich die kennzeichnenden Merkmale des Anspruchs 1 aufweist.

Dabei ist vorgesehen, daß sich das Steigrohr nur in der oberen Hälfte, vorzugsweise dem oberen Drittel der maximalen Füllstandshöhe des Abscheiderbehälters erstreckt. Auf diese Weise ist bei dem erfindungsgemäßen Flüssigkeitsabscheider im unteren Bereich des Abscheiderbehälters über dessen gesamte Fläche eine Schlammfangvorrichtung ausgebildet, wobei keinerlei Einbauten oder zusätzliche eingesetzte Behälter die beruhigten Strömungen im unteren Bereich des Abscheiderbehälters behindern oder stören. Im oberen Bereich des Abscheiderbehälters, d.h. nahe dem Flüssigkeitsspiegel sammeln sich die spezifisch leichteren Teilchen an. Unterhalb von diesem Bereich ist die Einlauföffnung des Steigrohres angeordnet. Erfindungsgemäß wesentlich ist, daß das das Streigrohr nicht bis zum Boden des Abscheiderbehälters reicht, so daß innerhalb des Abscheiderbehälters die Schlammfangvorrichtung und der Koaleszenzabscheiders als unterschiedliche Bereiche innerhalb des Abscheiderbehälters vorgesehen sind, ohne durch spezielle Konstruktionen räumlich voneinander getrennt zu sein.

Durch konstruktive Maßnahmen muß verhindert werden, daß die bereits abgeschiedene oder im Aufsteigen befindliche Leichtflüssigkeit direkt in die Einlauföffnung des Steigrohres einströmt. Dies ist dadurch erreicht, die das Steigrohr im wesentlichen S-förmig ist und die Einlauföffnung des Steigrohres nach oben zum Flüssigkeitsspiegel der im Abscheiderbehälter befindlichen Flüssigkeit weist.

Die Einlauföffnung des Steigrohres ist mit einer sich über einen Teilumfang erstreckenden Leitwand versehen. Dabei erstreckt sich die Leitwand bis oberhalb des Flüssigkeitsspiegels der im Abscheiderbehälter befindlichen Flüssigkeit. Der von der Leitwand abgedeckte Teilumfang der Einlauföffnung kann zwischen 1/4 und 3/4 der Umfangs liegen, d.h. etwa 90° bis 270° betragen. Vorzugsweise erstreckt sich die Leitwand jedoch über einen Bereich von ca. 200°. Durch der Leitwand ist verhindert, daß sich eine sogenannte Kurzschlußströmung einstellt, infolge der das zu reinigende Flüssigkeitsgemisch direkt vom Einlauf des Abscheiderbehälters zu der Einlauföffnung des Steigrohres strömt. Da das zu reinigende Flüssigkeitsgemisch in den Abscheiderbehälter in radialer Richtung oder zumindest mit einer ausgeprägten radialen Komponente eingeleitet wird, ist die Leitwand auf der dem Einlauf auf der dem Einlauf des Abscheiderbehälters zugewandten Seite der Einlauföffnung des Steigrohres angeordnet, um Kurzschlußströmungen zwischen dem Einlauf und der Einlauföffnung des Steigrohres zu vermeiden.

Vorzugsweise ist bei dem Flüssigkeitsabscheider eine Verschlußvorrichtung vorgesehen, die den Auslauf des Abscheiderbehälters verschließt, wenn die sich an der Oberfläche ansammelnde Leichtflüssigkeitsschicht eine vorbestimmte Dicke erreicht hat. Zu diesem Zweck kann erfindungsgemäß ein schwimmergesteuerter Verschlußkörper angeordnet sein, mittels dessen die Einlauföffnung des Steigrohrs verschließbar ist. Wenn die Dicke der sich ansammelnden Leichtflüssigkeitsschicht ansteigt, sinkt der Verschlußkörper in einer Führung entsprechend nach unten, bis er bei vorbestimmter Schichtdicke auf der Einlauföffnung des Steigrohres zu liegen kommt und diese abdichtet.

In Weiterbildung der Erfindung kann vorgesehen sein, daß die Einlauföffnung des Steigrohres von einer Bodenplatte umgeben ist. Die Bodenplatte, die vorzugsweise im wesentlichen parallel zum Boden des Abscheiderbehälters verläuft, kann dabei als Tragkonstruktion für ein Leitblech oder ein Koaleszenzfilter dienen und ihrerseits entweder von dem Steigrohr und/oder einer zusätzlichen, vorzugsweise an einer Wand des Abscheiderbehälters abgestützten Tragkonstruktion gehalten sein.

In Weiterbildung der Erfindung ist vorgesehen, daß die Leitwand im Abstand zur Einlauföffnung angeordnet ist. Dabei ist sie vorzugsweise an ihrer Unterseite dichtend auf die Bodenplatte aufgelagert.

Wesentlich für die Abscheidewirkung kann darüber hinaus sein, in welcher Weise die zu reinigende Flüssigkeit in den Abscheidebehälter eingeleitet wird. Es hat sich als vorteilhaft erwiesen, an den Einlauf eine im wesentlichen T-förmige Einlaufschikane anzuschließen, die einen nach unten zum Boden des Abscheiderbehälters gerichteten Einlaufschacht aufweist, der am unteren Ende in zwei in entgegengesetzte Richtungen weisende Auslaßkanäle verzweigt. Die Auslaßkanäle stellen sicher, daß die in den Abscheiderbehälter eingeleitete Flüssigkeit im wesentlichen in Umfangsrichtung des Abscheiderbehälters entlang der Innenseite der Behälterwand einströmt, wodurch zusätzlich verhindert wird, daß zwischen dem Einlauf und dem Auslauf eine direkte Strömung erfolgt. Darüber hinaus kann der gesamte Querschnitt des Abscheiderbehälters zum Aufschwimmen von Leichtflüssigkeit bzw. Absinken von schwereren Teilchen effektiv genutzt werden. Die seitlichen Auslaßkanäle können entweder im wesentlichen senkrecht zum vertikalen Einlaufschacht verlaufen oder leicht nach unten zum Boden des Abscheiderbehälters geneigt sein. Es hat sich bewährt, wenn die Längsachse des Einlaufschachtes und die Längsachsen der Auslaßkanäle jeweils einen Winkel im Bereich zwischen 90° bis 120° zwischen sich einschließen.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: einen Vertikalschnitt durch einen Flüssigkeitsabscheider gemäß einem Ausführungsbeispiel und
- Figur 2: den Flüssigkeitsabscheider gemäß Figur 1 in Aufsicht.

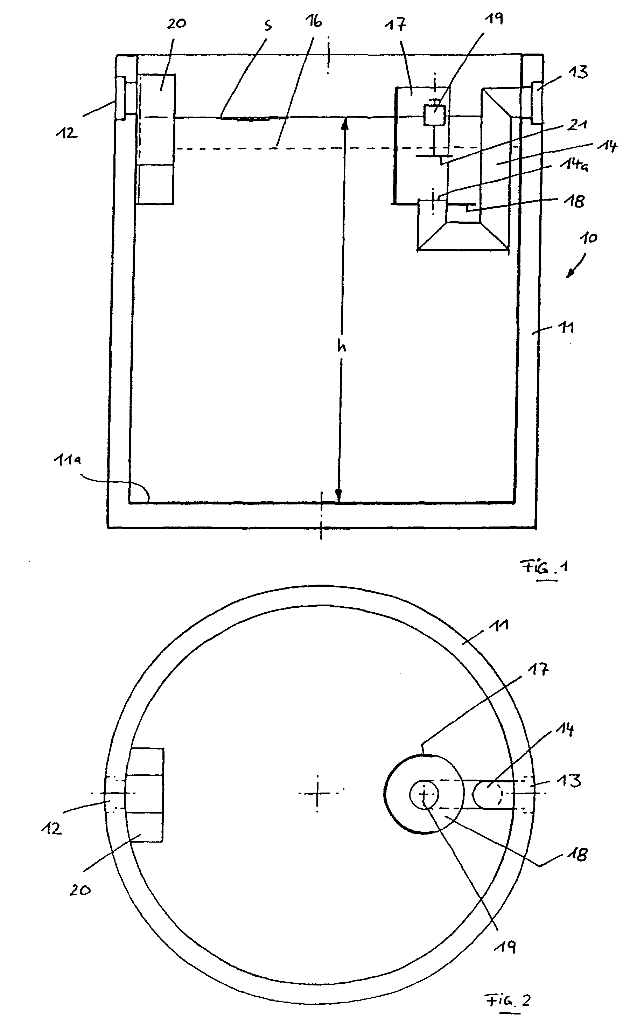

Gemäß den Figuren 1 und 2 weist ein Flüssigkeitsabscheider 10 einen Abscheiderbehälter 11 auf, der einen Kreisquerschnitt besitzt. Nahe der Oberseite des Abscheiderbehälters 11 ist ein Einlauf 12 vorgesehen, an den sich eine Einlaufschikane 20 anschließt. Die Einlaufschikane 20 besitzt einen nach unten zum Boden 11a des Abscheiderbehälters 11 gerichteten vertikalen Einlaufschacht, der am unteren Ende in einen Auslaßkanal übergeht.

Dem Einlauf 12 diametral gegenüberliegend ist im Abscheiderbehälter 11 ein Auslauf 13 vorgesehen, dem ein S-förmiges Steigrohr 14 vorgeschaltet ist. Das Steigrohr 14 besitzt eine nach oben zum Flüssigkeitsspiegel s der im Abscheiderbehälter 11 befindlichen Flüssigkeit weisende Einlauföffnung 14a, die von einer im wesentlichen horizontalen Bodenplatte 18 umgeben ist. Das andere Ende des Steigrohres 14 ist an den Auslauf 13 angeschlossen.

Wie Figur 1 zeigt, erstreckt sich das Steigrohr 14 nur in dem oberen Drittel der maximalen Füllstandshöhe h des Abscheiderbehälters 11, so daß der Bodenbereich des Abscheiderbehälters 11, der als Schlammfangvorrichtung wirkt, von die Flüssigkeitsströmungen störenden Einbauten vollständig frei ist.

Auf ihrer dem Einlauf 12 zugewandten Seite ist der Einlauföffnung 14a eine sich über einen Teilumfang erstreckende Leitwand 17 zugeordnet, die sich bis oberhalb des Flüssigkeitsspiegels s erstreckt und auf der Bodenplatte 18 dichtend abgestützt ist. Die Leitwand 17, die sich auf der dem Einlauf 12 des Abscheiderbehälters 11 zugewandten Seite der Einlaßöffnung 14a des Steigrohres 14 befindet, verhindert eine direkte Strömung der zu reinigenden Flüssigkeit zwischen dem Einlauf 12 und der Einlauföffnung 14a des Steigrohres 14 und ist im Abstand von der Einlauföffnung 14a des Steigrohres 14 angeordnet, wodurch die zu reinigende Flüssigkeit weiter abgelenkt wird und längere Strömungswege hat.

Innerhalb der teilzylinderschalenförmigen Leitwand 17 ist ein Verschlußkörper 21 vertikal verschiebbar gelagert, der in bekannter Weise mit einem Schwimmer 19 gekoppelt ist, der in nicht dargestellter, bekannter Weise geführt ist. Mit Hilfe des Verschlußkörpers 21 kann die Einlaßöffnung 14a des Steigrohres 14 verschlossen werden, wenn die Dicke der sich oberflächlich ansammelnden Leichtflüssigkeitsschicht über ein vorbestimmtes Maß ansteigt und somit die Trennschichtlage 16 absinkt.

Wie insbesondere in Figur 2 dargestellt ist, besitzt die Einlaufschikane 20 an dem unteren Ende ihres vertikalen Einlaufschachtes eine Verzweigung in zwei in entgegengesetzte Richtungen weisende Auslaßkanäle, so daß die über den Einlaß 12 zugeführte, zu reinigende Flüssigkeit jeweils entlang der Innenwandung des Abscheiderbehälters 11 in Umfangsrichtung strömt. Die Flüssigkeit strömt an der Innenwandung des Abscheiderbehälters 11 entlang bis in den diametral entgegengesetzten Bereich, in dem das Steigrohr 14 angeordnet ist.

## Patentansprüche

1. Flüssigkeitsabscheider, insbesondere zum Trennen von Gemischen aus Wasser und spezifisch leichteren Flüssigkeiten wie Öl, Benzin, Fett oder dergleichen, mit einem Abscheiderbehälter (11), der einen Einlauf (12) und einen Auslauf (13) aufweist, und mit einem dem Auslauf (13) vorgeschalteten Steigrohr (14), das im wesentlichen S-förmig ist und dessen Einlauföffnung (14a) im Abscheiderbehälter (11) unterhalb des Auslaufs (13) mündet und nach oben zum Flüssigkeitsspiegel (s) der im Abscheiderbehälter (11) befindlichen Flüssigkeit weist, wobei eine teilzylinderschalenförmige Leitwand (17) auf der dem Einlauf (12) des Abscheiderbehälters (11) zugewandten Seite der Einlauföffnung (14a) des Steigrohres (14) angeordnet ist, **dadurch gekennzeichnet, daß** sich das Steigrohr (14) nur in der oberen Hälfte, vorzugsweise im oberen Drittel der maximalen Füllstandshöhe (h) des Abscheiderbehälters (11) erstreckt und daß die Leitwand (17) die Einlauföffnung (14a) des Steigrohres (14) über einen Teilumfang umgibt und sich bis oberhalb des Flüssigkeitsspiegels (s) der im Abscheiderbehälter befindlichen Flüssigkeit erstreckt.

2. Flüssigkeitsabscheider nach Anspruch 1, **dadurch gekennzeichnet, daß** die Leitwand (17) sich über einen Umfang im Bereich von 90° bis 270°, vorzugsweise ca. 200° erstreckt.

3. Flüssigkeitsabscheider nach Anspruch 1 oder 2, **dadurch gekennzeichnet, daß** die Leitwand (17) im Abstand zur Einlauföffnung (14a) angeordnet ist.

4. Flüssigkeitsabscheider nach einem der Ansprüche 1 bis 3, **dadurch gekennzeichnet, daß** die Einlauföffnung (14a) des Steigrohres (14) von einer Bodenplatte (18) umgeben ist.

5. Flüssigkeitsabscheider nach Anspruch 4, **dadurch gekennzeichnet, daß** die Leitwand (17) an ihrer Unterseite dichtend auf die Bodenplatte (18) aufgelagert ist.

6. Flüssigkeitsabscheider nach einem der Ansprüche 1 bis 5, **dadurch gekennzeichnet, daß** ein schwimmergesteuerter Verschlußkörper (21) angeordnet ist, mittels dessen die Einlauföffnung (14a) des Steigrohres (14) verschließbar ist.

7. Flüssigkeitsabscheider nach einem der Ansprüche 1 bis 6, **dadurch gekennzeichnet, daß** an den Einlauf (12) eine im wesentlichen T-förmige Einlaufschikane (20) anschließt, die einen nach unten zum Boden (11a) des Abscheiderbehälters (11) gerichteten Einlaufschacht aufweist, der am unteren Ende in zwei in entgegengesetzten Richtungen weisende Auslaßkanäle verzweigt.

8. Flüssigkeitsabscheider nach Anspruch 7, **dadurch gekennzeichnet, daß** die Längsachse des Einlaufschachtes (20a) und die Längsachse der Auslaßkanäle jeweils einen Winkel im Bereich von 90° bis 120° zwischen sich einschließen.

## Claims

1. Liquid separator, particularly for separating mixtures of water and specifically lighter liquids such as oil, petrol, grease, fat or the like, having a separator tank (11) provided with an inlet (12) and an outlet (13) and with a substantially S-shaped riser pipe (14) upstream of the outlet (13) and whose inlet port (14a) issues into the separator tank (11) below the outlet (13) and which is directed upwards to the liquid level (s) of the liquid in the separator tank (11), a part cylindrical shell-shaped guiding wall (17) being located on the side of the inlet port (14a) of the riser pipe (14) facing the inlet (12) of the separator tank (11), **characterized in that** the riser pipe (14) only extends into the upper half, preferably the upper third of the maximum fill height (h) of the separator tank (11) and that the guiding wall (17) surrounds, over a partial circumference, the inlet port (14a) of the riser pipe (14) and extends above the liquid level (s) of the liquid in the separator tank.

2. Liquid separator according to claim 1, **characterized in that** the guiding wall (17) extends over a circumference range of 90 to 270°, preferably approximately 200°.

3. Liquid separator according to claim 1 or 2, **characterized in that** the guiding wall (17) is spaced from the inlet port (14a).

4. Liquid separator according to one of the claims 1 to 3, **characterized in that** the inlet port (14a) of the riser pipe (14) is surrounded by a base plate (18).

5. Liquid separator according to claim 4, **characterized in that** the underside of the guiding wall (17) is sealingly mounted on the base plate (18).

6. Liquid separator according to one of the claims 1 to 5, **characterized in that** a float-controlled closure body (21) is provided and closes the inlet port (14a) of the riser pipe (14).

7. Liquid separator according to one of the claims 1 to 6, **characterized in that** to the inlet (12) is connected a substantially T-shaped inlet baffle (20), which has a sump directed downwards towards the bottom (11a) of the separator tank (11) and which at the lower end branches into two discharge passages pointing in opposite directions.

8. Liquid separator according to claim 7, **characterized in that** the longitudinal axis of the sump (20a) and the longitudinal axis of the discharge passages in each case form between them an angle in the range 90 to 120°.

## Revendications

1. Séparateur de liquides, en particulier pour la séparation de mélanges à base d'eau et de liquides spécifiquement plus légers tels que de l'huile, de l'essence, de la graisse ou similaires, comprenant un récipient de séparateur (11) présentant une entrée (12) et une sortie (13), ainsi qu'une conduite montante (14) en aval de la sortie (13) sensiblement en forme de S et dont l'ouverture d'admission (14a) débouche dans le récipient de séparateur (11) en-dessous de la sortie (13) et est dirigée vers le haut en direction du niveau (s) du liquide contenu dans le récipient de séparateur (11), dans lequel une paroi de guidage (17) semi-cylindrique est disposée sur la face de l'ouverture d'admission (14a) de la conduite montante (14) en regard de l'entrée (12) du récipient de séparateur (11), **caractérisé en ce que** la conduite montante (14) ne s'étend que sur la moitié supérieure, de préférence sur le tiers supérieur de la hauteur de remplissage maximale (h) du récipient de séparateur (11) et **en ce que** la paroi de guidage (17) entoure l'ouverture d'admission (14a) de la conduite montante (14) sur une partie de sa circonférence et s'étend jusqu'au-dessus du niveau (s) du liquide contenu dans le récipient de séparateur.

2. Séparateur de liquides selon la revendication 1, **caractérisé en ce que** la paroi de guidage (17) s'étend sur un secteur compris entre 90° et 270°, de préférence environ 200°.

3. Séparateur de liquides selon la revendication 1 ou 2, **caractérisé en ce que** la paroi de guidage (17) est disposée à distance de l'ouverture d'admission (14a).

4. Séparateur de liquides selon l'une quelconque des revendications 1 à 3, **caractérisé en ce que** l'ouverture d'admission (14a) de la conduite montante (14) est entouré par une plaque de fond (18).

5. Séparateur de liquides selon la revendication 4, **caractérisé en ce que** la paroi de guidage (17) est montée par sa face inférieure de manière étanche sur la plaque de fond (18).

6. Séparateur de liquides selon l'une quelconque des revendications 1 à 5, **caractérisé en ce qu'**est disposé un élément d'obturation (21) commandé par un flotteur au moyen duquel l'ouverture d'admission (14a) de la conduite montante (14) peut être obturée.

7. Séparateur de liquides selon l'une quelconque des revendications 1 à 6, **caractérisé en ce qu'**une chicane d'entrée (20) sensiblement en forme de T est raccordée à l'ouverture (12), présentant une bouche d'avaloir dirigée vers le bas en direction du fond (11a) du récipient de séparateur (11), qui se sépare à l'extrémité inférieure en deux canaux d'évacuation orientés dans des directions opposées.

8. Séparateur de liquides selon la revendication 7, **caractérisé en ce que** l'axe longitudinal de la bouche d'avaloir (20a) et l'axe longitudinal des canaux d'évacuation forment à chaque fois entre eux un angle compris entre 90° et 120°.
